# EUROPEAN PATENT APPLICATION

(11) **EP 4 650 168 A1**
(43) Date of publication of application: **19.11.2025**
(21) Application number: 24741535.9
(22) Date of filing: 10.01.2024
(51) Int. Cl.: B32B 27/00, B32B 9/00, B32B 27/32, B65D 65/40

(54) **GAS BARRIER LAMINATE, PACKAGING CONTAINER, AND PACKAGED PRODUCT**

(30) Priority: 11.01.2023 JP 2023002691
(71) Applicant: Toppan Holdings Inc., Tokyo 110-0016 (JP)
(72) Inventor: FUKUGAMI, Miki, Tokyo 110-0016 (JP); KUDO, Shigeki, Tokyo 110-0016 (JP)
(74) Representative: Hoffmann Eitle
(86) International application number: PCT/JP2024/000302
(87) International publication number: WO 2024/150763

(57) **Abstract**

The gas barrier laminate includes a gas barrier film having a gas barrier layer on at least one side of a substrate including a first polypropylene film, and at least one second polypropylene film laminated on the gas barrier film. The gas barrier layer is obtained using a composition for forming the gas barrier layer that contains a resin and a first silicon compound. The first silicon compound is at least one of a silicon alkoxide represented by a following general formula (1) and a hydrolysate thereof, and a chlorine content as measured by combustion ion chromatography is more than 0.0008% by mass and 0.0080% by mass or less relative to a total mass of the gas barrier laminate. Si(OR¹)₄ ...(1) (In the above general formula (1), OR¹ represents a hydrolyzable group.)

## Description

### [Technical Field]

The present invention relates to a gas barrier laminate, a packaging container, and a packaged product.

### [Background Art]

In recent years, environmental problems such as marine pollution by plastic waste as well as waste problems have intensified globally, and there is a growing recognition around the world that they are becoming a global threat. In Japan, the Ministry of the Environment formulated the Resource Circulation Strategy for Plastics in May 2019 to comprehensively promote plastic resource circulation, explicitly stating that the government will make effective use of used plastics by 2035 through 100% plastic reuse and recycling, and other measures.

To deal with such a social situation, there is an increasing demand for packaging materials that are suitable for material recycling. Material recycling of packaging materials made of a plurality of laminated layers of resins such as nylon, polyethylene terephthalate and polyolefin have the problem that it is difficult to separate and recover the resins from the layers. Recently, the shift towards monomaterials for packaging materials has been accelerating, and for example, packaging materials having a substrate made of a polypropylene film and a sealant layer have come into use.

Such packaging materials are recycled, for example, by crushing a collected packaging material, feeding the crushed packaging material into an extruder to melt it, and pelletizing the molten material for reuse.

However, polypropylene resin is easily oxidized by heat, and may be decomposed by oxidization when melted at high temperature. During this, the polypropylene resin is carbonized and turns brown or black. It is difficult to use a polypropylene resin that has become colored through such a process as a recycled product.

In view of the above, it has been proposed to suppress coloration during recycling and improve recyclability by using a laminate including two or more resin films containing a polyolefin, wherein when each resin film is peeled off from the laminate and both surfaces of all the resin films are analyzed with an X-ray fluorescence analyzer, a value obtained by dividing a sum of X-ray fluorescence intensities of chlorine detected from all the surfaces of all the resin films by a thickness of the laminate (the sum of X-ray fluorescent intensities of chlorine/the thickness of the laminate) is 0.015 kcps/µm or less.

### [Citation List]

### [Patent Literature]

[PTL 1] WO 2022/181549 A

### [Summary of the Invention]

### [Problem to be Solved by the Invention]

However, the laminate described in PTL 1 still has room for improvement in terms of recyclability.

The laminate may also be used in the manufacture of packaging containers that require high-temperature sterilization at 121°C or higher (hereinafter also referred to as "high retort treatment"). Therefore, even if the laminate described in PTL 1 can be melted to obtain an uncolored recycled product, the laminate is required to have good interlayer adhesion even after high-temperature sterilization.

The present disclosure has been made in consideration of the above-described problems, and an object thereof is to provide a gas barrier laminate, a packaging container, and a packaged product that have good recyclability, and have good interlayer adhesion even after high retort treatment.

### [Solution to Problem]

The inventors of the present disclosure conducted intensive studies to solve the above-described problems. As a result, the inventors of the present disclosure have found that setting the chlorine content in the entire gas barrier laminate as measured by combustion ion chromatography to be within a specific range is effective in solving the above-described problems, and have arrived at the present disclosure.

That is, an aspect of the present disclosure provides a gas barrier laminate including: a gas barrier film having a gas barrier layer on at least one side of a substrate including a first polypropylene film; and at least one second polypropylene film laminated on the gas barrier film, in which the gas barrier layer is obtained using a composition for forming the gas barrier layer, the composition containing a resin and a first silicon compound, the first silicon compound is a hydrolysate of a silicon compound represented by a following general formula (1), and a chlorine content as measured by combustion ion chromatography is more than 0.0008% by mass and 0.0080% by mass or less relative to a total mass of the gas barrier laminate.

Si(OR¹)₄ ... (1)

### (In the above general formula (1), OR¹ represents a hydrolyzable group.)

According to the above gas barrier laminate, a chlorine content is 0.0080% by mass or less in the entire gas barrier laminate as measured by combustion ion chromatography. Therefore, when the gas barrier laminate is melted for recycling, chlorine has reduced effectiveness as a catalyst for the oxidative decomposition reaction of a polypropylene resin originating from the first or second polypropylene film, and thus the degree of decomposition of the polypropylene resin by oxidization decreases. This makes the polypropylene resin less susceptible to carbonization and coloration. As a result, the gas barrier laminate can have good recyclability. On the other hand, since the chlorine content in the entire gas barrier laminate as measured by combustion ion chromatography is more than 0.0008% by mass, it can have good interlayer adhesion even after high retort treatment.

In the above gas barrier laminate, a chlorine content as measured by combustion ion chromatography may be 0.0010% by mass or more and 0.0060% by mass or less relative to the total mass of the gas barrier laminate.

When the chlorine content is within this range, it is possible to further improve the gas barrier performance and interlayer adhesion of the gas barrier laminate after high retort treatment. In addition, the recyclability of the gas barrier laminate can be further improved.

In the above gas barrier laminate, a chlorine content as measured by combustion ion chromatography may be 0.0010% by mass or more and 0.0050% by mass or less relative to the total mass of the gas barrier laminate.

In the above gas barrier laminate, when a total mass of the resin and the first silicon compound in the composition for forming the gas barrier layer is assumed to be 100, a product of a mass proportion of the first silicon compound to the total mass and a ratio of a thickness of the gas barrier layer to a thickness of the gas barrier laminate may be 0.35 or less.

This facilitates improving the recyclability of the gas barrier laminate.

In the above gas barrier laminate, when a total mass of the resin and the first silicon compound in the composition for forming the gas barrier layer is assumed to be 100, a product of a mass proportion of the first silicon compound to the total mass and a ratio of a thickness of the gas barrier layer to a thickness of the gas barrier laminate may be more than 0.04.

When the product is more than 0.04, the gas barrier performance and interlayer adhesion of the gas barrier laminate after high retort treatment tend to be further improved.

In the above gas barrier laminate, the gas barrier film may further include an inorganic oxide layer between the substrate and the gas barrier layer.

This further improves the gas barrier performance of the gas barrier laminate.

In the above gas barrier laminate, the resin in the composition for forming the gas barrier layer may be a water-soluble macromolecule, the composition for forming the gas barrier layer may further contain a second silicon compound, and the second silicon compound may be at least one of a silane coupling agent represented by a following general formula (2) and a hydrolysate thereof.

(R²Si(OR³)₃)ₙ ... (2)

(In the above general formula (2), OR³ represents a hydrolyzable group, R² represents a monovalent organic group, and n represents an integer greater than or equal to 1.)

This further improves the interlayer adhesion of the gas barrier laminate.

In the above gas barrier laminate, the gas barrier layer may have a thickness of 0.1 to 1.0 µm.

In that case, compared to when the thickness of the gas barrier layer is less than 0.1 µm, it is possible to further improve the gas barrier performance of the gas barrier laminate even after high retort treatment. In addition, compared to when the thickness of the gas barrier layer exceeds 1.0 µm, the gas barrier laminate is less likely to curl, and therefore can be more suitable for use as a gas barrier laminate for forming a packaging container.

In the above gas barrier laminate, the gas barrier film may further include an anchor coat layer between the substrate and the inorganic oxide layer.

In the above gas barrier laminate, the second polypropylene film may be a sealant layer.

Another aspect of the present disclosure provides a packaging container obtained using the above gas barrier laminate.

This packaging container is obtained using the above gas barrier laminate that has good recyclability and can maintain good interlayer adhesion even after high retort treatment. This suppresses delamination in the gas barrier laminate even after a packaged product that is the packaging container in which contents are placed is subjected to high retort treatment. In addition, the packaging container left after the contents have been removed from the packaged product has good recyclability.

Yet another aspect of the present disclosure provides a packaged product including the above packaging container and contents contained in the packaged container.

This packaged product includes the packaging container obtained using the above gas barrier laminate that has good recyclability and can maintain good interlayer adhesion even after high retort treatment. This suppresses delamination in the gas barrier laminate even after high retort treatment. In addition, the packaging container left after the contents have been removed from the packaged product has good recyclability.

### [Advantageous Effects of the Invention]

According to the present disclosure, a gas barrier laminate, a packaging container, and a packaged product that have good recyclability, and have good interlayer adhesion even after high retort treatment are provided.

### [Brief Description of the Drawings]

Fig. 1 is a schematic cross-sectional view illustrating an embodiment of the gas barrier laminate of the present disclosure.
Fig. 2 is a schematic cross-sectional view illustrating an embodiment of the packaged product of the present disclosure.
Fig. 3 is a schematic cross-sectional view illustrating another embodiment of the gas barrier laminate of the present disclosure.
Fig. 4 is a schematic cross-sectional view illustrating another embodiment of the gas barrier laminate of the present disclosure.

### [Description of the Embodiments]

An embodiment of the present disclosure will be described in detail.

### <Gas barrier laminate>

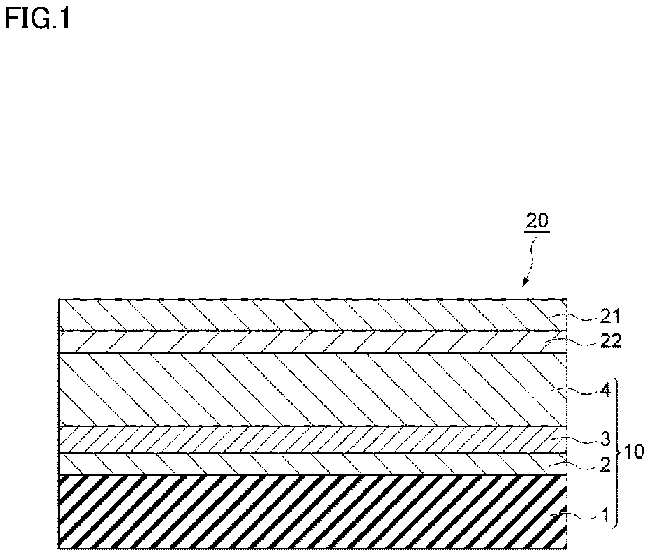

First, one embodiment of a gas barrier laminate of the present disclosure will be described with reference to Fig. 1. Fig. 1 is a schematic cross-sectional view showing one embodiment of the gas barrier laminate of the present disclosure.

The gas barrier laminate 20 shown in Fig. 1 includes a gas barrier film 10 having a gas barrier layer 4 on one side of a substrate 1 including a first polypropylene film, and a sealant layer 21 as a second polypropylene film laminated on the gas barrier film 10. In the gas barrier film 10, the gas barrier layer 4 is located on the side of the substrate 1 facing the sealant layer 21.

The gas barrier layer 4 is obtained using a composition for forming a gas barrier layer containing a resin and a first silicon compound. The first silicon compound is at least one of a silicon alkoxide represented by the following general formula (1) and a hydrolysate thereof.

Si(OR¹)₄ ... (1)

(In the above general formula (1), OR¹ represents a hydrolyzable group.)

In the gas barrier laminate 20, the chlorine content as measured by combustion ion chromatography is more than 0.0008% by mass and 0.0080% by mass or less relative to the total mass of the gas barrier laminate 20.

Note that the gas barrier film 10 may further include an inorganic oxide layer 3 between the substrate 1 and the gas barrier layer 4. The gas barrier film 10 may further include an anchor coat layer 2 between the substrate 1 and the inorganic oxide layer 3. The gas barrier laminate 20 may further include an adhesive layer 22 between the gas barrier layer 4 and the sealant layer 21.

The gas barrier laminate 20 has a chlorine content of 0.0080% by mass or less in the entire gas barrier laminate 20 as measured by combustion ion chromatography. Therefore, when the gas barrier laminate 20 is melted for recycling, chlorine has reduced effectiveness as a catalyst for the oxidative decomposition reaction of a polypropylene resin originating from the first polypropylene film included in the substrate 1 or the second polypropylene film as the sealant layer 21, and thus the degree of decomposition of the polypropylene resin by oxidization decreases. This makes the polypropylene resin less susceptible to carbonization and coloration. As a result, the gas barrier laminate 20 can have good recyclability. On the other hand, since the chlorine content in the entire gas barrier laminate as measured by combustion ion chromatography is more than 0.0008% by mass, it can have good interlayer adhesion even after high retort treatment.

Next, the substrate 1, the anchor coat layer 2, the inorganic oxide layer 3, the gas barrier layer 4, the adhesive layer 22, and the sealant layer 21 will be described in detail.

### (Substrate)

The substrate 1 includes a first polypropylene film. The first polypropylene film contains polypropylene resin. The polypropylene resin is preferably a homopolypropylene, which is a homopolymer of propylene. However, the polypropylene resin may be a propylene-α-olefin copolymer, which is a copolymer of propylene and α-olefin, or a mixture of a propylene-α-olefin copolymer and a homopolypropylene as long as the heat resistance is not impaired. To improve the adhesion of the substrate 1 to the anchor coat layer 2, the substrate 1 may further have a layer containing a propylene-α-olefin copolymer or a mixture of a propylene-α-olefin copolymer and a homopolypropylene on the surface of the first polypropylene film facing the anchor coat layer 2.

The polypropylene resin contained in the first polypropylene film may be a recycled polypropylene resin, or may be a polypropylene resin obtained by homopolymerizing propylene derived from biomass such as plants or copolymerizing it with another monomer. These polypropylene resins may be used alone or in combination with a polypropylene resin obtained by homopolymerizing propylene derived from ordinary fossil fuel or copolymerizing it with another monomer.

The first polypropylene film in the substrate 1 may be a stretched film or an unstretched film. A stretched film can be obtained by preparing a sheet of the above-described polypropylene resin and stretching the sheet by a conventional means. The stretched film may be either uniaxially or biaxially oriented.

The substrate 1 may further contain an additive as necessary. Examples of the additive include an antioxidant, a stabilizer, a lubricant such as calcium stearate, fatty acid amide, or erucic acid amide, an organic additive such as an antistatic agent, and an anti-blocking agent such as silica, zeolite, syloid, hydrotalcite, or silicon particles.

A surface of the substrate 1 may be subjected to surface treatment such as plasma treatment or corona treatment in order to improve the adhesion between the substrate 1 and the anchor coat layer 2.

Although the thickness of the substrate 1 is not particularly limited, for example, it may be 15 to 100 µm.

### (Anchor coat layer)

The anchor coat layer 2 is a layer that improves the adhesion between the substrate 1 and the inorganic oxide layer 3 after heat sterilization, and the gas barrier performance of the gas barrier film 10.

The material of the anchor coat layer 2 is not particularly limited as long as it is can improve the adhesion between the substrate 1 and the inorganic oxide layer 3. An example of such material is a reaction product of an organosilane or organometallic compound, a polyol compound, and an isocyanate compound. Thus, the anchor coat layer 2 also serves as a urethane adhesive layer.

The organosilane is, for example, a trifunctional organosilane, or a hydrolysate of trifunctional organosilane. The organometallic compound is, for example, a metal alkoxide, or a hydrolysate of a metal alkoxide. A metal element contained in the organometallic compound is, for example, Al, Ti, Zr, or the like. The hydrolysate of organosilane and the hydrolysate of metal alkoxide may each have at least one hydroxyl group.

The polyol compound is preferably an acrylic polyol for better transparency. The isocyanate compound mainly functions as a crosslinking agent or a curing agent. The polyol and isocyanate compounds may be a monomer or a polymer.

The thickness of the anchor coat layer 2 is not particularly limited as long as the adhesion between the substrate 1 and the inorganic oxide layer 3 can be improved. However, it is preferably greater than 50 nm. This further improves the gas barrier performance after high retort treatment compared to when the thickness of the anchor coat layer 2 is 50 nm or less. This also further improves the durability of the gas barrier laminate 20. The thickness of the anchor coat layer 2 is more preferably 70 nm or more, and even more preferably 80 nm or more. When the thickness of the anchor coat layer 2 is increased, a reduction in moisture barrier performance when an external force, such as stretching, is applied can be further suppressed. The thickness of the anchor coat layer 2 is preferably less than 300 nm. This further improves the durability of the gas barrier laminate 20, and also further improves the gas barrier performance after high retort treatment, compared to when the thickness of the anchor coat layer 2 is 300 nm or more. The thickness of the anchor coat layer 2 is more preferably 200 nm or less.

### (Inorganic oxide layer)

The inorganic oxide layer 3 is a layer containing an inorganic oxide, and can further improve the gas barrier performance of the gas barrier laminate 20. The inorganic oxide layer 3 may be transparent.

An inorganic substance forming the inorganic oxide may be, for example, at least one atom selected from the group consisting of Si, Al, Mg, Sn, Ti, and In. Examples of the inorganic oxide include aluminum oxide (AlOₓ), silicon oxide (SiOₓ), tin oxide, and magnesium oxide. These can be used singly or as a mixture of two or more. Among these examples, aluminum oxide or silicon oxide is preferred in terms of resistance to various types of sterilization. In particular, silicon oxide is preferred as the inorganic oxide. This allows the gas barrier laminate 20 to have better moisture barrier performance.

The inorganic oxide layer 3 may include a single layer or multiple layers.

The inorganic oxide layer 3 may be a vapor deposited layer.

The thickness of the inorganic oxide layer 3 varies depending on the type and composition of the inorganic oxide used. However, in general, it is preferably 5 to 300 nm, and its value is selected from this range appropriately. When the thickness of the inorganic oxide layer 3 is 5 nm or more, the inorganic oxide layer 3 is likely to be a homogeneous film and sufficiently fulfill a function as a gas barrier material. When the thickness of the inorganic oxide layer 3 is 300 nm or less, the inorganic oxide layer 3 is likely to remain flexible. This reduces the occurrence of cracks in the inorganic oxide layer 3 due to external factors such as bending or pulling of the gas barrier laminate 20.

The thickness of the inorganic oxide layer 3 is more preferably 10 to 150 nm.

### (Gas barrier layer)

The gas barrier layer 4 is a layer having gas barrier properties, and is obtained using a composition for forming the gas barrier layer. The composition for forming the gas barrier layer contains a resin and a first silicon compound. The first silicon compound is at least one of a silicon alkoxide represented by the following general formula (1) and a hydrolysate thereof. The composition for forming the gas barrier layer may further contain a second silicon compound. The second silicon compound is at least one of a silane coupling agent represented by the following general formula (2) and a hydrolysate thereof.

Si(OR¹)₄ ... (1)

(In the above general formula (1), OR¹ represents a hydrolyzable group.)

(R²Si(OR³)₃)ₙ ... (2)

(In the above general formula (2), OR³ represents a hydrolyzable group, R² represents a monovalent organic group, and n represents an integer greater than or equal to 1.)

An example of the resin is a water-soluble macromolecule. Examples of the water-soluble macromolecule include polyvinyl alcohol resin, modified polyvinyl alcohol resin, and polyacrylic acid. These can be used singly or in combination of two or more. Among these, the water-soluble macromolecule is preferably a polyvinyl alcohol resin or a modified polyvinyl alcohol resin. In that case, the composition allows the gas barrier film 10 to exhibit a better gas barrier performance after being cured. In addition, this composition can impart better flexibility to the gas barrier film 10 even after it is cured. This suppresses the occurrence of cracks in the gas barrier layer 4 during lamination or another step.

When the water-soluble macromolecule is made of a polyvinyl alcohol resin or a modified polyvinyl alcohol resin, a saponification index of the water-soluble macromolecule is not particularly limited. However, to improve the gas barrier performance of the gas barrier film 10, it is preferably 95% or more, and may be 100%.

The degree of polymerization of the water-soluble macromolecule is not particularly limited, but to improve the gas barrier performance of the gas barrier film 10, it is preferably 300 or more. The degree of polymerization of the water-soluble macromolecule is preferably 450 to 2,400.

The content of the water-soluble macromolecule is not particularly limited, but is preferably 25% by mass or more relative to the total mass of the water-soluble macromolecule and the first silicon compound (100% by mass). In that case, by curing the water-soluble macromolecule, it is possible to further improve the gas barrier performance and interlayer adhesion of the gas barrier laminate 20 even after high retort treatment. The content of the water-soluble macromolecule relative to the total mass of the water-soluble macromolecule and the first silicon compound is preferably 26% by mass or more, more preferably 27% by mass or more, and particularly preferably 40% by mass or more.

The content of the water-soluble macromolecule relative to the total mass of the water-soluble macromolecule and the first silicon compound (100% by mass) is preferably 60% by mass or less, more preferably 58% by mass or less, and particularly preferably 55% by mass or less. When the content of the water-soluble macromolecule is 60% by mass or less, the water resistance of the gas barrier layer 4 is improved, and the gas barrier performance and interlayer adhesion of the gas barrier laminate 20 can be further improved even after high retort treatment.

The first silicon compound is at least one of a silicon alkoxide and a hydrolysate thereof. The silicon alkoxide is represented by the following general formula (1). In that case, not only the gas barrier performance of the gas barrier laminate 20 but also the adhesion between the gas barrier layer 4 and the inorganic oxide layer 3 can be improved. This suppresses delamination in the gas barrier laminate 20.

Si(OR¹)₄ ... (1)

(In the general formula (1), OR¹ represents a hydrolyzable group.) Examples of R¹ include an alkyl group and -C₂H₄OCH₃. Examples of the alkyl group include a methyl group and an ethyl group. Among these groups, an ethyl group is preferred. In that case, the silicon alkoxide will be tetraethoxysilane (TEOS), which is relatively stable in an aqueous solvent after hydrolysis.

The content of the first silicon compound is not particularly limited. However, relative to the total mass of the water-soluble macromolecule and the first silicon compound (100% by mass), it is preferably 40% by mass or more, more preferably 42% by mass or more, and particularly preferably 45% by mass or more. In that case, compared to when the content of the first silicon compound is less than 40% by mass, it is possible to further improve the gas barrier performance and interlayer adhesion of the gas barrier laminate 20 even after high retort treatment.

The content of the first silicon compound is preferably 75% by mass or less, more preferably 74% by mass or less, and particularly preferably 73% by mass or less, relative to the total mass of the water-soluble macromolecule and the first silicon compound (100% by mass). When the content of the first silicon compound is 75% by mass or less, it is possible to prevent the cured gas barrier layer 4 from becoming too hard, which suppresses the occurrence of cracks in the gas barrier layer 4 and thus suppresses deterioration of its gas barrier performance. It also further improves the gas barrier performance and interlayer adhesion of the gas barrier laminate 20 even after high retort treatment. In addition, since the amount of hydrochloric acid required for hydrolysis can be reduced, the chlorine content in the gas barrier laminate 20 is less likely to be excessive, which makes it easier to recycle the gas barrier laminate 20.

The second silicon compound is at least one of a silane coupling agent and a hydrolysate thereof. The silane coupling agent is represented by the following general formula (2). This improves the adhesion between the gas barrier layer 4 and the inorganic oxide layer 3, which further improves the interlayer adhesion of the gas barrier laminate 20.

(R²Si(OR³)₃)ₙ ...... (2)

In the general formula (2), R² represents a monovalent organic group, OR³ represents a hydrolyzable group, and n represents an integer greater than or equal to 1.

Examples of the monovalent organic group represented by R² include monovalent organic groups containing a vinyl group, an epoxy group, a mercapto group, an amino group, or an isocyanate group. Among these, the monovalent organic group is preferably a monovalent organic group having an isocyanate group. In that case, the composition for forming the gas barrier layer can have better hot water resistance after curing, and the gas barrier laminate 20 can have a higher laminate strength even after high retort treatment.

Examples of R³ include an alkyl group and -C₂H₄OCH₃. Examples of the alkyl group include a methyl group and an ethyl group. Among these groups, a methyl group is preferred. It increases the rate of hydrolysis of the silane coupling agent.

R³ may be the same as or different from R². When n is an integer greater than or equal to 2, the R³ groups may be the same group or different from each other.

n represents an integer greater than or equal to 1. When n is 1, the silane coupling agent represents a monomer, whereas when n is greater than or equal to 2 or more, the silane coupling agent represents a multimer. The n is preferably 3. In that case, the hot water resistance of the gas barrier layer 4 can be further improved, and the gas barrier laminate 20 can have a higher laminate strength even after high retort treatment.

Examples of the silane coupling agent include silane coupling agents having a vinyl group, such as vinyltrimethoxysilane and vinyltriethoxysilane; silane coupling agents having an epoxy group, such as 3-glycidoxypropyltrimethoxysilane, 3-glycidoxypropyltriethoxysilane, 3-glycidoxypropylmethyldimethoxysilane, and 3-glycidoxypropylethyldiethoxysilane; silane coupling agents having a mercapto group, such as 3-mercaptopropyltrimethoxysilane and 3-mercaptopropylmethyldimethoxysilane; silane coupling agents having an amino group, such as 3-aminopropyltrimethoxysilane and 3-aminopropyltriethoxysilane; and silane coupling agents having an isocyanate group, such as 3-isocyanatopropyltriethoxysilane and 1,3,5-tris(3-methoxysilylpropyl)isocyanurate. These silane coupling agents may be used singly or in combination of two or more.

Among the above silane coupling agents, 1,3,5-tris(3-trialkoxysilylalkyl)isocyanurate represented by the general formula (NCO-R⁴Si(OR³)₃)₃ (where R⁴ is -(CH₂)ₙ-, and n is greater than or equal to 1) is the most preferred. This 1,3,5-tris(3-trialkoxysilylalkyl)isocyanurate is hydrophobic due to the polarity of its nurate moiety, and therefore can impart high water resistance to the gas barrier layer 4.

The content of the second silicon compound is not particularly limited. However, relative to the total mass of the water-soluble macromolecule and the first silicon compound (100% by mass), it is preferably 3% by mass or more, more preferably 5% by mass or more, and particularly preferably 7% by mass or more. In that case, compared to when the content of the second silicon compound is less than 3% by mass, by curing the mixture, it is possible to impart a higher laminate strength to the gas barrier laminate 20 even after high retort treatment.

The content of the second silicon compound is preferably 20% by mass or less, more preferably 15% by mass or less, and particularly preferably 12% by mass or less, relative to the total mass of the water-soluble macromolecule and the first silicon compound (100% by mass). In that case, since the content of the water-soluble macromolecule and the first silicon compound in the gas barrier layer 4 is higher than when the content of the second silicon compound exceeds 20% by mass, good gas barrier performance can be maintained.

Note that, when calculating the content of each of the water-soluble macromolecule and the first and second silicon compounds, the calculation is performed after converting the mass of the first silicon compound to the mass of SiO₂ and the mass of the second silicon compound to the mass of R²Si(OH)₃.

The composition for forming the gas barrier layer may contain a known additive such as an isocyanate compound, a dispersant, a stabilizer, a viscosity modifier, or a colorant as necessary to an extent that does not impair the gas barrier performance.

The gas barrier layer 4 preferably has a thickness of 0.1 µm or more. In that case, compared to when the thickness of the gas barrier layer 4 is less than 0.1 µm, it is possible to further improve the gas barrier performance of the gas barrier laminate 20 even after high retort treatment. To improve the gas barrier performance of the gas barrier laminate 20, the thickness of the gas barrier layer 4 is more preferably 0.15 µm or more, and particularly preferably 0.17 µm or more.

On the other hand, the gas barrier layer 4 preferably has a thickness of 1.0 µm or less. Compared to when the thickness of the gas barrier layer 4 exceeds 1.0 µm, the gas barrier laminate 20 is less likely to curl, and therefore can be more suitable for use as a gas barrier laminate for forming a packaging container. To further improve the flexibility of the gas barrier laminate 20, the thickness of the gas barrier layer 4 is more preferably 0.7 µm or less, and particularly preferably 0.5 µm or less.

### (Adhesive layer)

The adhesive layer 22 is a layer for bonding the gas barrier laminate 4 in the gas barrier film 10 to the sealant layer 21. Examples of adhesives used to form the adhesive layer 22 include polyurethane resins obtained using an adhesive containing a main resin such as polyester polyol, polyether polyol, acrylic polyol, or carbonate polyol and a bifunctional or more isocyanate compound. These polyols may be used singly or in combination of two or more. For better heat resistance during heat sterilization (resistance to retort treatment), a two-component urethane adhesive can be preferably used.

For the purpose of promoting adhesion, a carbodiimide compound, an oxazoline compound, an epoxy compound, a phosphorus compound, a silane coupling agent, or the like may be added to the adhesive. Considering environmental impact, the adhesive used to form the adhesive layer 22 may be an adhesive whose macromolecule component is derived from biomass or a biodegradable adhesive. The adhesive may also be an adhesive with barrier properties.

The coating weight of adhesive may be, for example, 0.5 to 10 g/m² to obtain the desired adhesive strength, conformability, processability, and the like.

The adhesive layer 22 may be formed and laminated by a known method such as dry lamination or non-solvent lamination.

When non-solvent lamination is used, the coating weight of adhesive can be reduced to 0.5 to 3 g/m² compared to when dry lamination is used. This makes it possible to further increase the polypropylene content in the entire gas barrier laminate 20. This also improves the heat conduction from the heat-sealing bar during heat sealing of the gas barrier laminate 20, which reduces the sealing time and temperature, and therefore suppresses the occurrence of wrinkles and the like associated with heat sealing.

When non-solvent lamination is used, since the adhesive does not contain an organic solvent, the amount of residual solvent in the gas barrier laminate 20 can be reduced. More specifically, the gas barrier laminate 20 includes a polypropylene film as the substrate 1 and the sealant layer 21. Therefore, when the gas barrier laminate 20 is produced by dry lamination, the temperature during drying must be maintained lower than that for polyester-based laminates in order to prevent thermal shrinkage of the gas barrier laminate 20. In that case, the solvent in the adhesive may not be sufficiently evaporated and may remain in the gas barrier laminate 20, and the remaining solvent may emit an odor. In contrast, when non-solvent lamination is carried out using a solvent-free adhesive, the amount of residual solvent in the adhesive layer 2 can be further reduced, and thus the amount of residual solvent in the gas barrier laminate 20 can be reduced. Such a gas barrier laminate 20 is suitable for producing a monomaterial packaging container.

### (Sealant layer)

The sealant layer 21 includes a second polypropylene film. The second polypropylene film contains polypropylene resin. The polypropylene resin may be a homopolypropylene, which is a homopolymer of propylene, a propylene-α-olefin copolymer, which is a copolymer of propylene and α-olefin, or a mixture of these.

The polypropylene resin contained in the second polypropylene film may be a recycled polypropylene resin, or may be a polypropylene resin obtained by homopolymerizing propylene derived from biomass such as plants or copolymerizing it with another monomer. These polypropylene resins may be used alone or in combination with a polypropylene resin obtained by homopolymerizing propylene derived from ordinary fossil fuel or copolymerizing it with another monomer.

The second polypropylene film included in the sealant layer 21 may be a stretched film or an unstretched film, but preferably is an unstretched film to lower the melting point and facilitate heat sealing.

The sealant layer 21 may further contain an additive as necessary. Examples of the additive include an antioxidant, a stabilizer, a lubricant such as calcium stearate, fatty acid amide, or erucic acid amide, an organic additive such as an antistatic agent, and an anti-blocking agent such as silica, zeolite, syloid, hydrotalcite, or silicon particles.

The thickness of the sealant layer 21 is not particularly limited, but may be, for example, 15 µm or more, 30 µm or more, 50 µm or more, 60 µm or more, or 70 µm or more. The sealant layer 21 preferably has a thickness of 50 µm or more. When the thickness of the sealant layer 21 is 50 µm or more, the chlorine content in the gas barrier laminate 20 can be easily reduced, which further improves the recyclability of the gas barrier laminate 20. In addition, when the thickness of the sealant layer 21 is 50 µm or more, the rigidity of the sealant layer 21 can be increased. This allows a packaging bag obtained using the gas barrier laminate 20 to have better durability when it is dropped.

The thickness of the sealant layer 21 may be 150 µm or less, 130 µm or less, 110 µm or less, or 100 µm or less.

### (Gas barrier laminate)

In the gas barrier laminate 20, the chlorine content as measured by combustion ion chromatography is more than 0.0008% by mass and 0.0080% by mass or less relative to the total mass of the gas barrier laminate 20.

When the chlorine content in the gas barrier laminate 20 is 0.0080% by mass or less, the oxidative decomposition reaction of the polypropylene resin contained in the gas barrier laminate 20 is suppressed while the gas barrier laminate 20 is being melted at high temperature for recycling, which prevents the gas barrier laminate 20 from being colored so that it can be easily used as a recycled product and have good recyclability. On the other hand, when the chlorine content in the gas barrier laminate 20 is more than 0.0008% by mass, the gas barrier laminate 20 can have good interlayer adhesion even after high retort treatment.

The chlorine content in the gas barrier laminate 20 is preferably 0.0010% by mass or more, more preferably 0.0015% by mass or more, even more preferably 0.0020% by mass or more, and particularly preferably 0.0025% by mass or more. When the chlorine content is 0.0010% by mass or more, it is possible to further improve the gas barrier performance and interlayer adhesion of the gas barrier laminate 20 after high retort treatment.

The chlorine content in the gas barrier laminate 20 may be, for example, 0.0070% by mass or less, preferably 0.0060% by mass or less, more preferably 0.0050% by mass or less, even more preferably 0.0040% by mass or less, and particularly preferably 0.0030% by mass or less. When the chlorine content is 0.0060% by mass or less, it is possible to further improve the gas barrier performance and interlayer adhesion of the gas barrier laminate 20 after high retort treatment. In addition, the recyclability of the gas barrier laminate 20 can be further improved.

The gas barrier laminate 20 is cut to an appropriate size and melt-extruded. The melt mass flow rate (MFR, expressed in g/10 min) of the molten material may be, for example, 2.0 g/10 min or more and 7.0 g/10 min or less. The MFR is preferably 2.0 g/10 min or more and 6.5 g/10 min or less, more preferably 3.0 g/10 min or more and 6.0 g/10 min or less, and particularly preferably 3.4 g/10 min or more and 5.0 g/10 min and less. An MFR of 7.0 g/10 min or less is preferable in that a recyclable laminate can be obtained in which the decomposition of the recycled resin has not advanced. When the MFR is 2.0 g/10 min or more, it is possible to prevent the viscosity of the resin from becoming too high so that stable film formation can be achieved. The MFR can be measured by melt-extruding a molten material at a temperature of 230°C and a pressure of 2.16 kgf using a melt viscosity measuring device (Melt Indexer F-F01, manufactured by Toyo Seiki Seisaku-sho, Ltd.) in accordance with the method specified in JIS K 7210.

A product P (hereinafter also referred to as an "SiO₂ ratio") of a mass proportion C1 of the first silicon compound to the total mass (100) of the water-soluble macromolecule and the first silicon compound in the composition for forming the gas barrier layer, and a ratio R1 of the thickness of the gas barrier layer 4 to the thickness of the gas barrier laminate 20 is not particularly limited, but is preferably 0.35 or less, more preferably 0.25 or less, and particularly preferably 0.24 or less. When the SiO₂ ratio P is 0.35 or less, the recyclability of the gas barrier laminate 20 can be easily improved.

The SiO₂ ratio P is preferably 0.04 or more, more preferably 0.10 or more, and particularly preferably 0.15 or more. When the SiO₂ ratio P is more than 0.04, the gas barrier performance and interlayer adhesion of the gas barrier laminate 20 after high retort treatment tend to be further improved.

Although the thickness of the gas barrier laminate 20 is not particularly limited, it is preferably 200 µm or less. When the thickness of the gas barrier laminate 20 is 200 µm or less, its suitability for heat-sealing when producing a packaging container is less likely to decrease; therefore, the gas barrier laminate 20 is less likely to curl, which improves its suitability for use as a packaging container.

The thickness of the gas barrier layer 20 may be 180 µm or less, 160 µm or less, 140 µm or less, or 120 µm or less.

The thickness of the gas barrier laminate 20 may be 40 µm or more, 60 µm or more, 80 µm or more, or 100 µm or more.

### <Method of producing gas barrier laminate>

Next, a method of producing the gas barrier laminate 20 will be explained.

First, the substrate 1 is prepared.

Subsequently, the anchor coat layer 2 is formed on the substrate 1. The anchor coat layer 2 can be obtained by applying a composition for forming the anchor coat layer onto a surface of the substrate 1 and drying it.

Next, the inorganic oxide layer 3 is formed on the anchor coat layer 2.

The inorganic oxide layer 3 can be formed by vacuum vapor deposition, sputtering, ion plating, plasma-enhanced chemical vapor deposition (CVD), or the like. Considering productivity, vacuum vapor deposition is the most preferred method. The heating in the vacuum vapor deposition is preferably realized by any one of electron beam heating, resistance heating, and induction heating, and to have a wider range of options for deposited materials, electron beam heating is preferably used. In order to enhance the adhesion between the inorganic oxide layer 3 and the substrate 1 and to improve the density of the inorganic oxide layer 3, vapor deposition can be carried out by plasma-assisted CVD or ion beam-assisted deposition. In order to enhance the transparency of a deposited film, reactive deposition may be performed, in which any of various gases such as an oxygen gas is supplied.

Next, the gas barrier layer 4 is formed on the inorganic oxide layer 3 to obtain the gas barrier film 10.

The gas barrier layer 4 can be obtained by applying a composition for forming the gas barrier layer that contains a resin and the first silicon compound onto the inorganic oxide layer 3, and drying it. The composition for forming the gas barrier layer may further contain hydrochloric acid. Hydrochloric acid is added as a catalyst to promote the hydrolysis reaction of silicon alkoxide, which has a low hydrolysis rate. Hydrochloric acid is preferred because it has a greater reaction rate, is easier to evaporate, and is less expensive than other acids. When the composition for forming the gas barrier layer further contains the second silicon compound, and the silane coupling agent as the second silicon compound is a silane coupling agent having an epoxy group, hydrochloric acid can open the epoxide ring.

Examples of the coating method include wet film-forming methods such as gravure coating, dip coating, reverse coating, wire bar coating, and die coating.

The chlorine content in the gas barrier laminate 20 can be adjusted by adjusting the content of the first silicon compound or hydrochloric acid in the composition for forming the gas barrier layer, the film thickness of the gas barrier layer 4, or the coating conditions (heating temperature, heating time) for the composition for forming the gas barrier layer when forming the gas barrier layer 4.

Next, the sealant layer 21 is formed on the gas barrier laminate 4 of the gas barrier film 10 with the adhesive layer 22 placed between them. The gas barrier laminate 20 is thus obtained.

### <Packaged product>

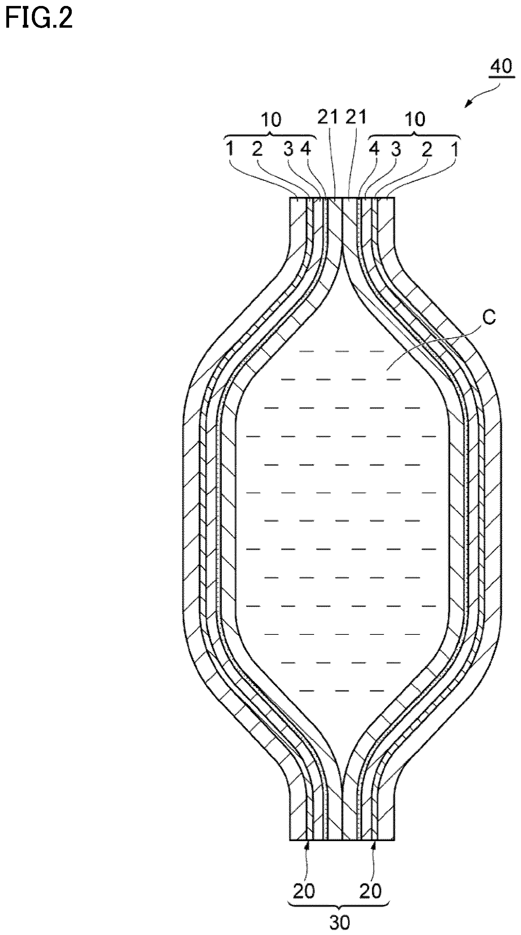

An embodiment of a packaged product of the present disclosure will be described with reference to Fig. 2. Fig. 2 is a cross-sectional view illustrating an embodiment of the packaged product of the present disclosure. In Fig. 2, components that are the same as those in Fig. 1 are denoted by the same reference numbers, and its description will not be repeated.

As shown in Fig. 2, a packaged product 40 includes a packaging container 30 and contents C contained in the packaging container 30. The packaging container 30 shown in Fig. 2 is obtained using a pair of gas barrier laminates 20, and the four edges of the gas barrier laminates 20 are heat-sealed with their respective sealant layers 21 facing each other. Note that, in Fig. 2, the adhesive layer 22 of the gas barrier laminate 20 is omitted.

This packaged product 40 includes the packaging container 30 obtained using the gas barrier laminate 20, and the gas barrier laminate 20 has good recyclability and can maintain good interlayer adhesion even after high retort treatment. This suppresses delamination in the gas barrier laminate 20 even after high retort treatment. In addition, the packaging container 30 left after the contents C have been removed from the packaged product 40 has good recyclability.

Note that the packaging container 30 can also be obtained by folding a single gas barrier laminate 20 and heat-sealing three edges of the folds of the gas barrier laminate 20 with their respective sealant layers 21 facing each other.

Examples of the packaging container 30 include a packaging bag, a laminated tube container, and a paper liquid container.

The contents C are not particularly limited, and examples of the contents C include food, liquid, medicine, and electronic parts.

The gas barrier laminate of the present disclosure is not limited to the above embodiment. For example, although the sealant layer 21 is bonded to the gas barrier layer 4 of the gas barrier film 10 in the gas barrier laminate 20 of the above embodiment, but the sealant layer 21 may be bonded to the substrate 1.

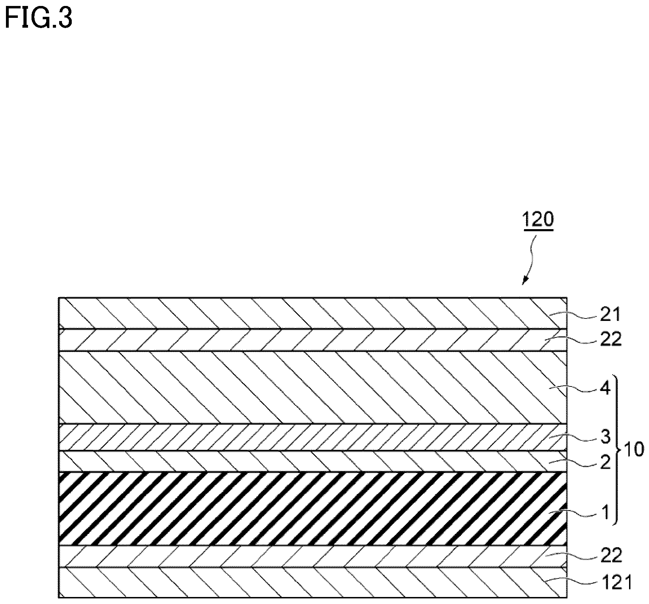

In the above embodiment, the gas barrier laminate 20 includes the gas barrier film 10, and the sealant layer 21 as the second polypropylene film laminated on the gas barrier film 10; however, to increase the rigidity of the packaging container, the gas barrier laminate may further include one or more outer layer films as the second propylene film in addition to the sealant layer. For example, as illustrated by a gas barrier laminate 120 shown in Fig. 3, the gas barrier laminate 120 may include an outer layer film 121, the gas barrier film 10, and the sealant layer 21 in this order. In Fig. 3, the outer layer film 121 is bonded to the substrate 1 via the adhesive layer 22. In addition, in Fig. 3, the gas barrier layer 4 of the gas barrier film 10 is located on the sealant layer 21 side (inner surface side) of the substrate 1, but the gas barrier layer 4 may be located on the outer layer film 121 side (outer surface side).

This gas barrier laminate 120 has good recyclability and can maintain good interlayer adhesion even after high retort treatment, and in addition, it makes the packaging container rigid so that excessive stress is less likely to be applied to the gas barrier layer 4 even after high retort treatment, and the occurrence of cracks in the gas barrier layer 4 can be suppressed.

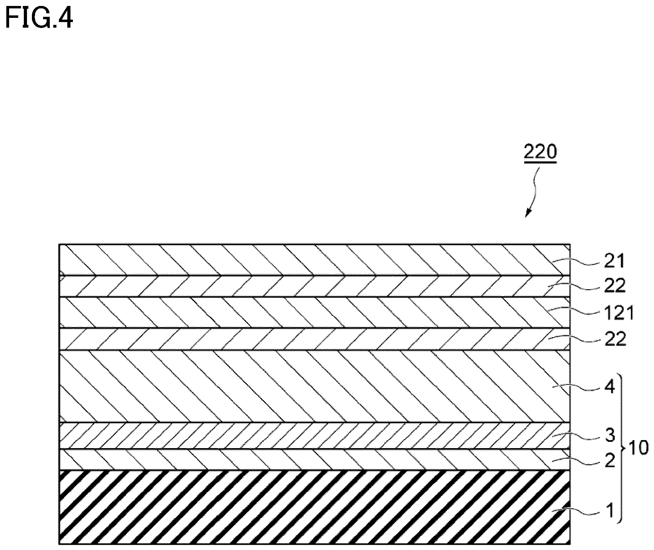

Further, as illustrated by a gas barrier laminate 220 shown in Fig. 4, a gas barrier laminate of the present disclosure may include the gas barrier film 10, the outer layer film 121, and the sealant layer 21 in this order. In Fig. 4, the outer layer film 121 is bonded to the gas barrier layer 4 via the adhesive layer 22. In Fig. 4, the gas barrier layer 4 of the gas barrier film 10 is located on the sealant layer 21 side (inner surface side) of the substrate 1; however, the gas barrier layer 4 may be located on the side (outer surface side) of the substrate 1 opposite to the sealant layer 21.

This gas barrier laminate 220 also has good recyclability and can maintain good interlayer adhesion even after high retort treatment, and in addition, it makes the packaging container rigid so that excessive stress is less likely to be applied to the gas barrier layer 4 even after high retort treatment, and the occurrence of cracks in the gas barrier layer 4 can be suppressed.

The outer layer film 121 is a layer provided to increase the rigidity of the packaging container. Therefore, the outer layer film 121 can be referred to as a second substrate layer.

The outer layer film 121 is a second polypropylene film. The second polypropylene film contains polypropylene resin. The polypropylene resin is preferably a homopolypropylene, which is a homopolymer of propylene. However, the polypropylene resin may be a propylene-α-olefin copolymer, which is a copolymer of propylene and α-olefin, or a mixture of a propylene-α-olefin copolymer and a homopolypropylene as long as the heat resistance is not impaired. To improve the adhesion between the outer layer film 121 and a layer that comes into contact with the outer layer film 121, a layer containing a propylene-α-olefin copolymer or a mixture of a propylene-α-olefin copolymer and a homopolypropylene may be provided on a surface of the second polypropylene film.

The polypropylene resin contained in the second polypropylene film may be a recycled polypropylene resin, or may be a polypropylene resin obtained by homopolymerizing propylene derived from biomass such as plants or copolymerizing it with another monomer. These polypropylene resins may be used alone or in combination with a polypropylene resin obtained by homopolymerizing propylene derived from ordinary fossil fuel or copolymerizing it with another monomer.

The second polypropylene film included in the outer layer film 121 may be a stretched film or an unstretched film. A stretched film can be obtained by preparing a sheet of the above-described polypropylene resin and stretching the sheet by a conventional means. The stretched film may be either uniaxially or biaxially oriented.

The outer layer film 121 may further contain additives as necessary. Examples of the additive include an antioxidant, a stabilizer, a lubricant such as calcium stearate, fatty acid amide, or erucic acid amide, an organic additive such as an antistatic agent, and an anti-blocking agent such as silica, zeolite, syloid, hydrotalcite, or silicon particles.

The outer layer film 121 may be the same as or different from the substrate 1.

Although the thickness of the outer layer film 121 is not particularly limited, for example, it may be 15 to 100 µm.

### <Outline of the present disclosure>

The following sets forth an outline of the present disclosure.
[1] A gas barrier laminate including: a gas barrier film having a gas barrier layer on at least one side of a substrate including a first polypropylene film; and at least one second polypropylene film laminated on the gas barrier film, in which the gas barrier layer is obtained using a composition for forming the gas barrier layer, the composition containing a resin and a first silicon compound, the first silicon compound is at least one of a silicon alkoxide represented by a following general formula (1) and a hydrolysate thereof, and a chlorine content as measured by combustion ion chromatography is more than 0.0008% by mass and 0.0080% by mass or less relative to a total mass of the gas barrier laminate.

   Si(OR¹)₄ ... (1)

   (In the above general formula (1), OR¹ represents a hydrolyzable group.)
[2] The gas barrier laminate according to [1], in which a chlorine content as measured by combustion ion chromatography is 0.0010% by mass or more and 0.0060% by mass or less relative to the total mass of the gas barrier laminate.
[3] The gas barrier laminate according to [2], in which a chlorine content as measured by combustion ion chromatography is 0.0010% by mass or more and 0.0050% by mass or less relative to the total mass of the gas barrier laminate.
[4] The gas barrier laminate according to any one of [1] to [3], in which, when a total mass of the resin and the first silicon compound in the composition for forming the gas barrier layer is assumed to be 100, a product of a mass proportion of the first silicon compound to the total mass and a ratio of a thickness of the gas barrier layer to a thickness of the gas barrier laminate is 0.35 or less.
[5] The gas barrier laminate according to any one of [1] to [4], in which, when a total mass of the resin and the first silicon compound in the composition for forming the gas barrier layer is assumed to be 100, a product of a mass proportion of the first silicon compound to the total mass and a ratio of a thickness of the gas barrier layer to a thickness of the gas barrier laminate is more than 0.04.
[6] The gas barrier laminate according to any one of [1] to [5], in which the gas barrier film includes an inorganic oxide layer between the substrate and the gas barrier layer.
[7] The gas barrier laminate according to any one of [1] to [6], in which the resin in the composition for forming the gas barrier layer is a water-soluble macromolecule, the composition for forming the gas barrier layer further contains a second silicon compound, and the second silicon compound is at least one of a silane coupling agent represented by a following general formula (2) and a hydrolysate thereof.

   (R²Si(OR³)₃)ₙ ... (2)

   (In the above general formula (2), OR³ represents a hydrolyzable group, R² represents a monovalent organic group, and n represents an integer greater than or equal to 1.)
[8] The gas barrier laminate according to any one of [1] to [7], in which the gas barrier layer has a thickness of 0.1 to 1.0 µm.
[9] The gas barrier laminate according to [6], in which the gas barrier film further includes an anchor coat layer between the substrate and the inorganic oxide layer.
[10] The gas barrier laminate according to any one of [1] to [9], in which the second polypropylene film is a sealant layer.
[11] A packaging container obtained using the gas barrier laminate according to any one of [1] to [10].
[12] A packaged product including the packaging container according to [11] and contents contained in the packaged product.

### Examples

In the following, the present disclosure will be specifically described by way of examples. However, the present disclosure should not be limited to the following examples.

### <Preparation of coating solution>

Coating solutions 1 to 5 were prepared as follows to be used as compositions for forming a gas barrier layer in the examples and comparative examples.

### (Coating solution 1)

The following solutions A and B were mixed so that polyvinyl alcohol (also referred to as "PVA") and tetraethoxysilane (also referred to as "TEOS") as a silicon alkoxide had mass proportions of 55 and 45, respectively, relative to the total mass (100) of PVA and TEOS (SiO₂ equivalent). Then, 10% by mass of a solution C was added to the solutions A and B relative to 100% by mass of PVA and TEOS (SiO₂ equivalent) together, thereby obtaining the coating solution.

Solution A: A 5% by mass aqueous solution of PVA (product name: Kuraray Poval 60-98, manufactured by Kuraray Co., Ltd.).

Solution B: A solution (5% by mass (SiO₂ equivalent) hydrolyzed solution of TEOS) obtained by mixing TEOS (product name: KBE04, solid content: 100%, manufactured by Shin-Etsu Chemical Co., Ltd.), methanol (manufactured by KANTO CHEMICAL CO., INC.), and 0.1N hydrochloric acid (manufactured by KANTO CHEMICAL CO., INC.) in a ratio of 17/10/73 (mass ratio), and hydrolyzing TEOS by stirring the resulting mixture.

Solution C: A solution obtained by diluting a mixed solution of 1,3,5-tris(3-methoxysilylpropyl)isocyanurate (product name: X-12-965P, manufactured by Shin-Etsu Chemical Co., Ltd.) as a silane coupling agent and water/IPA = 1/1 (mass ratio) so that the solid content in the combined solution became 5% by mass (R²Si(OH)₃ equivalent).

### (Coating solution 2)

The above-described solutions A and B were mixed so that PVA and TEOS had mass proportions of 45 and 55, respectively, relative to the total mass (100) of PVA and TEOS (SiO₂ equivalent). Then, 10% by mass of a solution C was added to the solutions A and B relative to 100% by mass of PVA and TEOS (SiO₂ equivalent) together, thereby obtaining the coating solution.

### (Coating solution 3)

The above-described solutions A and B were mixed so that PVA and TEOS had mass proportions of 28 and 72, respectively, relative to the total mass (100) of PVA and TEOS (SiO₂ equivalent). Then, 10% by mass of a solution C was added to the solutions A and B relative to 100% by mass of PVA and TEOS (SiO₂ equivalent) together, thereby obtaining the coating solution.

### (Coating solution 4)

The above-described solutions A and B were mixed so that PVA and TEOS had mass proportions of 23 and 77, respectively, relative to the total mass (100) of PVA and TEOS (SiO₂ equivalent). Then, 10% by mass of a solution C was added to the solutions A and B relative to 100% by mass of PVA and TEOS (SiO₂ equivalent) together, thereby obtaining the coating solution.

### (Coating solution 5)

The above-described solutions A and B were mixed so that PVA and TEOS had mass proportions of 90 and 10, respectively, relative to the total mass (100) of PVA and TEOS (SiO₂ equivalent). Then, 10% by mass of a solution C was added to the solutions A and B relative to 100% by mass of PVA and TEOS (SiO₂ equivalent) together, thereby obtaining the coating solution.

### <Preparation of composition for forming anchor coat layer>

A composition for forming the anchor coat layer was prepared as follows.

Acrylic polyol was mixed with tolylene diisocyanate so that the number of NCO groups in the tolylene diisocyanate matched the number of OH groups in the acrylic polyol, and the mixture was diluted with ethyl acetate so that the solid (acrylic polyol and tolylene diisocyanate) content became 5% by mass. 5 parts by mass of β-(3,4-epoxycyclohexyl)trimethoxysilane was further added to a total of 100 parts by mass of the acrylic polyol and tolylene diisocyanate in the mixed solution after dilution, and these compounds were mixed to prepare the composition for forming the anchor coat layer (anchor coat agent).

### <Production of gas barrier laminate>

### (Examples 1, 3, 4, and 5 and Comparative Examples 1 and 3)

First, a biaxially oriented polypropylene film (product name: "ME-1", OPP, manufactured by Mitsui Chemicals Tohcello, Inc.) with a thickness of 20 µm was prepared as the substrate.

Next, the composition for forming the anchor coat layer prepared as described above was applied onto one surface of the substrate by gravure coating to form a coating film. The coating film was dried by heating at 60°C for 60 seconds, thereby forming an anchor coat layer (AC layer) having a thickness of 100 nm.

Then, an SiOₓ film (inorganic oxide layer) with a thickness of 25 nm was formed on the anchor coat layer. The SiOₓ film was formed using a vacuum vapor deposition device of the electron beam heating type so as to evaporate silicon dioxide by electron beam heating.

A coating liquid of the corresponding type shown in Table 1 was applied onto the SiOₓ film to form a coating film. The coating film was dried by heating at 60°C for 60 seconds to form a gas barrier layer with a thickness shown in Table 1 (the thickness a of the gas barrier layer) after drying. A gas barrier film consisting of the substrate, the anchor coat layer, the inorganic oxide layer, and the gas barrier layer was thus obtained.

Then, an unstretched polypropylene film ("TORAYFAN ZK207", manufactured by Toray Industries, Inc.) with a thickness of 60 µm was bonded as a sealant layer to a surface of the gas barrier layer of this gas barrier film by dry lamination using a two-component urethane adhesive ("A525/A52").

A gas barrier laminate was thus obtained in which the substrate, the anchor coat layer, the inorganic oxide layer, the gas barrier layer, the adhesive layer, and the sealant layer were laminated in this order. The SiO₂ ratio P represented by the following formula was determined for each of the obtained gas barrier laminates. The results are shown in Table 1. SiO2 ratio P = TEOS (SiO2 equivalent) mass proportion × thickness a (µm) of gas barrier layer/ thickness b (µm) of gas barrier laminate (laminate)

### (Example 6)

A gas barrier laminate was obtained in the same manner as in Example 1, except that an unstretched polypropylene film ("CPP50") having a thickness of 50 µm as shown in Table 1 was used as the sealant layer. The SiO₂ ratio P of the obtained gas barrier laminate was determined in the same manner as in Example 1. The result is shown in Table 1.

### (Example 7)

A gas barrier laminate was obtained in the same manner as in Example 1, except that an unstretched polypropylene film ("CPP80") having a thickness of 80 µm as shown in Table 1 was used as the sealant layer. The SiO₂ ratio P of the obtained gas barrier laminate was determined in the same manner as in Example 1. The result is shown in Table 1.

### (Example 8)

A gas barrier laminate was obtained in the same manner as in Example 1, except that an unstretched polypropylene film ("CPP100") having a thickness of 100 µm as shown in Table 1 was used as the sealant layer. The SiO₂ ratio P of the obtained gas barrier laminate was determined in the same manner as in Example 1. The result is shown in Table 1.

### (Example 9)

A gas barrier laminate was obtained in the same manner as in Example 1, except that the sealant layer and the gas barrier layer were bonded together by non-solvent lamination using a solvent-free adhesive ("TSN-4864A/TSN-4864B3", manufactured by Toyo-Morton, Ltd.) as the adhesive. The SiO₂ ratio P of the obtained gas barrier laminate was determined in the same manner as in Example 1. The result is shown in Table 1.

### (Example 2 and Comparative Example 2)

A gas barrier film was produced in the same manner as in Example 1, except that the mass proportions of PVA and TEOS (SiO₂ equivalent) in the coating liquid and the thickness a of the gas barrier layer were set to the values shown in Table 1.

A biaxially oriented polypropylene film ("ME-1", OPP, manufactured by Mitsui Chemicals Tohcello, Inc.) with a thickness of 20 µm was bonded as an outer layer film to a surface of the gas barrier layer of this gas barrier film by dry lamination via a two-component urethane adhesive.

Next, an unstretched polypropylene film with a thickness of 60 µm was bonded as the sealant layer to a surface of the substrate of the gas barrier film prepared in Example 1 by dry lamination via a two-component urethane adhesive.

Gas barrier laminates were thus obtained that have thicknesses b shown in Table 1 and in which the sealant layer, the adhesive layer, the substrate, the anchor coat layer, the inorganic oxide layer, the gas barrier layer, the adhesive layer, and the outer layer film laminated in this order. The SiO₂ ratio P of the obtained gas barrier laminate was determined in the same manner as in Example 1. The result is shown in Table 1.

### <Measurement of chlorine content>

The chlorine content in each of the gas barrier laminates obtained in the Examples and Comparative Examples was measured by combustion ion chromatography.

Specifically, first, the gas barrier laminate was cut in the thickness direction to obtain a combustion sample. The combustion sample was placed on a ceramic board and weighed. The weight of the combustion sample was about 30 mg.

Then, the combustion sample was combusted under the following conditions 1 using an automatic sample combustion device (AQF-2100H, manufactured by Nittoseiko Analytech Co., Ltd.), and the generated gas was collected in 10 mL of an absorbing liquid.

After that, the absorbing liquid was adjusted to 15 mL with pure water to obtain an analytical sample. The analytical sample was subjected to quantitative analysis under the following conditions 2 using ion chromatography (ICS-3000, manufactured by Thermo Fisher Scientific) to measure the chlorine concentration (% by mass) in the sample. The result is shown in Table 1.

### (Conditions 1)

Inlet temperature: 900°C
Outlet temperature: 1000°C
Gas flow rate (O₂): 400 mL/min
Gas flow rate (Ar): 200 mL/min
Flow rate of humidifying Ar gas in the gas absorption unit when the generated gas is absorbed in the absorbing liquid: 100 mL/min

### (Conditions 2)

Separation column: Dionex Ion Pac AS18 (4 mm x 150 mm)
Guard column: Dionex Ion Pac AG18 (4mm x 30mm)
Suppressor: Dionex ADRS-600 (external mode)
Meter: Electrical conductivity meter
Eluent: KOH aqueous solution (an eluent generator EGCIII was used)
Eluent flow rate: 1.2 mL/min
Amount of analytical sample injected: 250 µL

### <Evaluation of gas barrier laminate>

### (1) Evaluation of recyclability

The gas barrier laminates obtained in the Examples and Comparative Examples were cut to an appropriate size, and then melt-extruded at a temperature of 230°C and a pressure of 2.16 kgf using a melt viscosity measuring device (Melt Indexer F-F01, manufactured by Toyo Seiki Seisaku-sho, Ltd.) in accordance with the method specified in JIS K 7210. The appearance of each resulting extrudate was then visually observed.

Then, the following evaluation ranks were created based on the coloration of the extrudates, and their recyclability was evaluated based on these evaluation ranks. The results are shown in Table 2.

### (Evaluation ranks)

A: No coloration was observed
B: Slight coloration was observed
C: Strong coloration was observed

Gas barrier laminates with the evaluation ranks "A" and "B" were determined to have passed a recyclability standard, whereas gas barrier laminates with the evaluation rank "C" were determined to have failed the recyclability standard.

### (2) Melt mass flow rate (MFR)

The gas barrier laminates obtained in the Examples and Comparative Examples were cut to an appropriate size, and then melt-extruded at a temperature of 230°C and a pressure of 2.16 kgf using a melt viscosity measuring device (Melt Indexer F-F01, manufactured by Toyo Seiki Seisaku-sho, Ltd.) in accordance with the method specified in JIS K 7210. The MFR (unit: g/10 min) of the melt was then measured. The MFR was measured five times, and the mean of the five measurements was calculated. The results are shown in Table 2.

### (3) Gas barrier performance after high retort treatment

### (Production of sealed container)

Using the gas barrier laminates obtained in the Examples and Comparative Examples, three-sided pouches having an opening were produced. The three-sided pouches were formed by folding the gas barrier laminate so that the unstretched polypropylene film face each other, and then heat-sealing them together. The opening of each three-sided pouch was sealed after pouring tap water (city water) through the opening, thereby preparing a sealed container.

### (High retort treatment)

The thus obtained sealed containers were subjected to retort treatment at 130°C for 60 minutes by using a hot-water storage type retort oven.

### (Measurement of oxygen permeability)

A 297 mm x 210 mm test sample was cut out from the gas barrier laminate of each sealed container after high retort treatment. The oxygen permeability (cc/m²·day·atm) of this test sample was measured using an oxygen permeability measuring device ("OX-TRAN2/20", manufactured by MOCON) at a temperature of 30°C and a relative humidity of 70%. The measurement was carried out according to Method B (equal-pressure method) specified in JIS K-7126, and ASTM 3985-81. The results are shown in Table 2.

### (4) Interlayer adhesion after high retort treatment

To evaluate the interlayer adhesion in the gas barrier laminate of each sealed container after the high retort treatment, a test sample measuring 100 mm in length and 15 mm in width (test width) was cut out from the gas barrier laminate of the sealed container after the high retort treatment. After removing water from this test sample, the laminate strength between the gas barrier layer and the sealant layer or the outer layer film (second polypropylene film) was measured. The measurement was performed according to JIS K 6854, with a peel speed of 300 mm/min and a T-peel angle. The measured values are expressed in [N/15 mm]. The results are shown in Table 2. Test samples with a laminate strength of 2.0 N/15 mm or more were determined to have passed an interlayer adhesion standard after high retort treatment, and test samples with a laminate strength of less than 2.0 N/15 mm were determined to have failed the interlayer adhesion standard after high retort treatment.

**[Table 1]**

| | Coating liquid type | PVA and TEOS mass proportions in coating liquid | | Gas barrier thickness a | Gas barrier laminate thickness b | Presence of outer layer film | SiO₂ ratio P* | Chlorine content |
|---|---|---|---|---|---|---|---|---|
| | | PVA | TEOS (SiO₂ equivalent) | | | | | |
| | | | | µm | µm | | | mass% |
| Ex. 1 | Coating liquid 1 | 55 | 45 | 0.3 | 83 | - | 0.16 | 0.0032 |
| Ex. 2 | Coating liquid 1 | 55 | 45 | 0.8 | 105 | Yes | 0.34 | 0.0056 |
| Ex. 3 | Coating liquid 2 | 45 | 55 | 0.3 | 83 | - | 0.20 | 0.0032 |
| Ex. 4 | Coating liquid 3 | 28 | 72 | 0.3 | 83 | - | 0.26 | 0.0041 |
| Ex. 5 | Coating liquid 4 | 23 | 77 | 0.3 | 83 | - | 0.28 | 0.0062 |
| Ex. 6 | Coating liquid 1 | 55 | 45 | 0.3 | 73 | - | 0.18 | 0.0031 |
| Ex. 7 | Coating liquid 1 | 55 | 45 | 0.3 | 103 | - | 0.13 | 0.0025 |
| Ex. 8 | Coating liquid 1 | 55 | 45 | 0.3 | 123 | - | 0.11 | 0.0023 |
| Ex. 9 | Coating liquid 1 | 55 | 45 | 0.3 | 82 | - | 0.16 | 0.0032 |
| Comp. Ex. 1 | Coating liquid 1 | 55 | 45 | 0.8 | 83 | - | 0.43 | 0.0082 |
| Comp. Ex. 2 | Coating liquid 1 | 55 | 45 | 1.5 | 105 | Yes | 0.64 | 0.0130 |
| Comp. Ex. 3 | Coating liquid 5 | 90 | 10 | 0.3 | 83 | - | 0.04 | 0.0008 |

| | | | | | | | | |
|---|---|---|---|---|---|---|---|---|
| * P = TEOS mass proportion x a/b | | | | | | | | |

**[Table 2]**

| | Recyclability | MFR (g/10 min) | Gas barrier performance after high retort treatment | Interlayer adhesion after high retort treatment |
|---|---|---|---|---|
| | | | O₂ permeability after high retort | Laminate strength after high retort |
| | | | cc/m²·day·atm | N/15 mm |
| Ex. 1 | A | 3.3 | 1.0 | 3.5 |
| Ex. 2 | A | 4.5 | 0.7 | 3.8 |
| Ex. 3 | A | 3.2 | 1.1 | 4.0 |
| Ex. 4 | A | 3.8 | 2.1 | 4.0 |
| Ex. 5 | B | 5.8 | 6.7 | 4.2 |
| Ex. 6 | A | 3.2 | 0.9 | 3.3 |
| Ex. 7 | A | 3.1 | 0.8 | 3.8 |
| Ex. 8 | A | 3.0 | 1.0 | 4.2 |
| Ex. 9 | A | 3.2 | 1.2 | 3.7 |
| Comp. Ex. 1 | C | 6.9 | 0.8 | 3.9 |
| Comp. Ex. 2 | C | 7.5 | 0.7 | 4.0 |
| Comp. Ex. 3 | A | 3.2 | 1.5 | 0.7 |

### [Industrial Applicability]

Since the gas barrier laminate of the present disclosure has good recyclability and can maintain good interlayer adhesion even after high retort treatment, it can be used to produce an improved packaging container. In addition, since the packaging container can be reused as a recycled product after use, it can help solving environmental and waste problems.

### [Reference Signs List]

- 1: Substrate
- 2: Anchor coat layer
- 3: Inorganic oxide layer
- 4: Gas barrier layer
- 10: Gas barrier film
- 20, 120, 220: Gas barrier laminate
- 30: Packaging container
- 40: Packaged product
- 21: Sealant layer (second polypropylene film)
- 22: Adhesive layer
- 121: Outer layer film (second polypropylene film)
- C: Contents

## Claims

1. A gas barrier laminate comprising:
a gas barrier film having a gas barrier layer on at least one side of a substrate including a first polypropylene film; and
at least one second polypropylene film laminated on the gas barrier film,
wherein the gas barrier layer is obtained using a composition for forming the gas barrier layer, the composition containing a resin and a first silicon compound,
the first silicon compound is at least one of a silicon alkoxide represented by a following general formula (1) and a hydrolysate thereof, and
a chlorine content as measured by combustion ion chromatography is more than 0.0008% by mass and 0.0080% by mass or less relative to a total mass of the gas barrier laminate.
Si(OR¹)₄ ... (1)
(In the above general formula (1), OR¹ represents a hydrolyzable group.)

2. The gas barrier laminate according to claim 1, wherein the chlorine content as measured by combustion ion chromatography is 0.0010% by mass or more and 0.0060% by mass or less relative to the total mass of the gas barrier laminate.

3. The gas barrier laminate according to claim 2, wherein the chlorine content as measured by combustion ion chromatography is 0.0010% by mass or more and 0.0050% by mass or less relative to the total mass of the gas barrier laminate.

4. The gas barrier laminate according to claim 1, wherein, when a total mass of the resin and the first silicon compound in the composition for forming the gas barrier layer is assumed to be 100, a product of a mass proportion of the first silicon compound to the total mass and a ratio of a thickness of the gas barrier layer to a thickness of the gas barrier laminate is 0.35 or less.

5. The gas barrier laminate according to claim 1, wherein, when a total mass of the resin and the first silicon compound in the composition for forming the gas barrier layer is assumed to be 100, a product of a mass proportion of the first silicon compound to the total mass and a ratio of a thickness of the gas barrier layer to a thickness of the gas barrier laminate is more than 0.04.

6. The gas barrier laminate according to claim 1, wherein the gas barrier film further includes an inorganic oxide layer between the substrate and the gas barrier layer.

7. The gas barrier laminate according to claim 1, wherein the resin in the composition for forming the gas barrier layer is a water-soluble macromolecule,
the composition for forming the gas barrier layer further contains a second silicon compound, and the second silicon compound is at least one of a silane coupling agent represented by a following general formula (2) and a hydrolysate thereof.
(R²Si(OR³)₃)ₙ ... (2)
(In the above general formula (2), OR³ represents a hydrolyzable group, R² represents a monovalent organic group, and n represents an integer greater than or equal to 1.)

8. The gas barrier laminate according to claim 1, wherein the gas barrier layer has a thickness of 0.1 to 1.0 µm.

9. The gas barrier laminate according to claim 6, wherein the gas barrier film further includes an anchor coat layer between the substrate and the inorganic oxide layer.

10. The gas barrier laminate according to claim 1, wherein the second polypropylene film is a sealant layer.

11. A packaging container obtained using the gas barrier laminate according to any one of claims 1 to 10.

12. A packaged product including the packaging container according to claim 11 and contents contained in the packaged product.
